(19) **Europäisches Patentamt**

**European Patent Office**

**Office européen des brevets**

(11) **EP 0 722 101 B1**

(12) **EUROPEAN PATENT SPECIFICATION**

(45) Date of publication and mention
of the grant of the patent:
**29.12.2004 Bulletin 2004/53**

(51) Int Cl.⁷: **G02B 6/26**, G02B 6/293, G02B 6/32

(21) Application number: **95117321.0**

(22) Date of filing: **03.11.1995**

(54) **Optical fiber ferrule and optical coupler constructed using the optical fiber ferrule**

Filteroptische Muffe und optischer Koppler, hergestellt unter Verwendung der filteroptischen Muffe

Embouteur fibre optique et coupleur optique construi utilisant l'embouteur fibre optique

(84) Designated Contracting States:
**DE FR GB**

(30) Priority: **31.03.1995 JP 10066795**
**13.01.1995 JP 2103295**

(43) Date of publication of application:
**17.07.1996 Bulletin 1996/29**

(73) Proprietor: **SEIKOH GIKEN Co., Ltd.**
**Matsudo-shi, Chiba-ken (JP)**

(72) Inventors:
• **Takahashi, Mitsuo**
**Matsudo-shi, Chiba-ken (JP)**
• **Yamada, Kunio**
**Matsudo-shi, Chiba-ken (JP)**
• **Wu, Yuing**
**Matsudo-shi, Chiba-ken (JP)**

(74) Representative:
**Schmidt, Frank-Michael, Dr.-Ing. et al**
**Zenz, Helber, Hosbach & Partner,**
**Patentanwälte,**
**Huyssenallee 58-64**
**45128 Essen (DE)**

(56) References cited:
| EP-A- 0 437 040 | EP-A- 0 725 289 |
| GB-A- 2 221 058 | US-A- 4 733 931 |
| US-A- 4 925 267 | US-A- 4 989 946 |

**Description**

BACKGROUND OF THE INVENTION

1. FIELD OF THE INVENTION

The present invention relates to an optical fiber ferrule with four-core optical fibers used as an optical component, a bidirectional optical coupler for full-duplex optical communication wherein a pair of lightwaves at different wavelengths are concurrently transmitted in the opposite directions, and also such an optical coupler in a coupler used as a unidirectional optical multiplexer/demultiplexer.

2. RELATED ART

Described hereafter is the structure of the optical coupler in the prior art, consisting of two graded index rod lenses, and a wavelength division multiplexing means having non-uniform spectral responsive filtering and reflection surface.

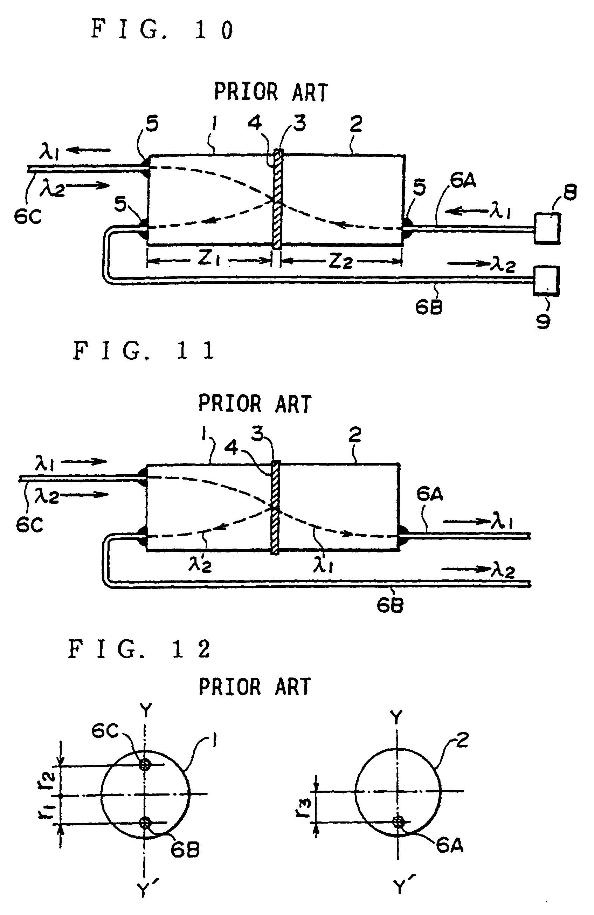

FIG. 10 shows in principle the structure of the bidirectional optical coupler using the above mentioned optical coupling structure. FIG. 11 shows in principle the structure of the unidirectional optical splitter.

Since the optical coupler is commonly used for the structures of FIGs. 10 and 11, the optical coupler structure will be described hereafter.

Graded index rod lenses 1, 2 have the same axial length ($Z_1 = Z_2 = 0.25$ pitch). These graded index rod lenses are available in the market as selfoc® lenses of Nihon Ita Glass Co., Ltd.

Dielectric material layers are deposited on the surface of glass plate 3 so that the reflection and transmission coefficients have different spectral responses. The glass plate 3 transmits the lightwave at first wavelength $\lambda_1$ and reflects the lightwave at second wavelength $\lambda_2$.

Optical fibers 6A through 6C are connected to the outer surfaces of graded index rod lenses 1, 2 as shown in FIG. 10.

The end-faces of optical fibers 6A through 6C are accurately fastened by an epoxy resin 5 to the graded index rod lens on line Y-Y' passing through the optical axis thereof in the same distance ($r_1 = r_2 = r_3$) from the optical axis thereof.

The lightwave power generated at a wavelength of $\lambda_1$ from a laser diode light source 8 is incident on the bidirectional optical coupler of FIG. 10. The lightwave is input through optical fiber 6A into the graded index rod lens 2.

The end-face of an optical fiber 6B is connected to an optical receiver 9 which consists of a photodiode.

The lightwave at a second wavelength $\lambda_2$ is transmitted through an optical fiber 6C, reflected from the wavelength division multiplexing means 4 consisting of the glass plate 3 and the dielectric layers for, and incident on the optical fiber 6B passing back through the graded index rod lens 1 in the opposite direction.

The lightwave at the first wavelength $\lambda_1$, which is fed from the laser diode light source 8 through the graded index rod lens 2, is transmitted to the optical fiber 6C through the wavelength division multiplexing means consisting of the glass plate 3 and dielectric layer 4 the graded index rod lens 1.

The operation of the unidirectional optical multiplexer/demultiplexer will be described hereafter referring to FIG. 11. As described heretofore, the optical coupler has the same structure as the bidirectional optical coupler.

The combined lightwaves at wavelengths of $\lambda_1$ and $\lambda_2$ are incident on the graded index rod lens 1 after passing through the optical fiber 6C. The second lightwave power at a wavelength of $\lambda_2$ is reflected from the wavelength division multiplexing means consist of the glass plate 3 and the dielectric layers 4. The first lightwave power at a wavelength of $\lambda_1$ is incident on the graded index rod lens 2 after passing through the division multiplexing means and then goes to the optical fiber 6A. The second lightwave power at a wavelength of $\lambda_2$, which is reflected from the wavelength division multiplexing means consisting of the glass plate 3 and the dielectric layer 4, goes back to the optical fiber 6B passing back through the graded index rod lens 1. This process is also reversible. If the lightwave at a wavelength of $\lambda_1$ is fed to the optical fiber 6A when the lightwave at a wavelength of $\lambda_2$ is fed to the optical fiber 6B, the combined lightwaves at wavelengths of $\lambda_1$ and $\lambda_2$ can be obtained from the optical fiber 6C.

There is a well known optical coupler fabricated by fusing and drawing a pair of attached optical fiber portions, which differs from that fabricated using a pair of graded index rod lenses. For instance, an optical coupler of the fusion and drawn type is disclosed in United Kingdom patent application number GB2239719A. An optical coupler fabricated based on the Evanescent effect is produced and sold by Fujikura Co., Ltd.

The optical coupler of the fusion and drawn type has an isolation of 15dB between a pair of wavelengths, an optical coupler of the graded index rod lens type has an isolation of 40dB or more.

The optical coupler of the graded index rod lens type has a certain optical power splitting ratio which is independent of the light power wavelength, and however the optical coupler of the fusion and drawn type has a wavelength dependent optical power splitting ratio.

Contrarily, the optical coupler of the graded index type has such defect that any alignment errors between the optical fiber 6B or 6C and the rod lens 1 and between the optical fiber 6A and rod lens 2 cause a large insertion loss when the optical fibers 6A through 6C are connected to graded index rod lenses 1 and 2. The optical fibers 6A, 6B, and 6C are to be arranged at $r_1$, $r_2$ and $r_3$ distant from the central optical axes of the graded index rod lenses 1 and 2, respectively. Distances $r_1$, $r_2$ and $r_3$ are to be aligned at specified values plus (or minus) 1 to 2μm or less. Each of the optical fibers 6A, 6B or 6C is to be fastened to the respective rod lens at the specified point of location so that the optical fibers 6A, 6B or 6C are set at the point of location determined by line Y-Y' which passes through the central optical axis of rod lens 1 or 2. If errors occur when the optical fibers 6A through 6C are fastened to the rod lenses 1 and 2, excessive optical power losses are generated in proportion with these errors.

The optical fibers 6A through 6C are to be fastened to graded index rod lenses 1 and 2 by the epoxy resin so that no error may occur. Since the fabrication requires a number of processes a high degree of skill, and a great amount of expense, the price of the product is necessarily high. If a laser power source having a large optical power capability is used together with the optical coupler, the epoxy resin will be fatigued by the laser power during the operation over a long period of time.

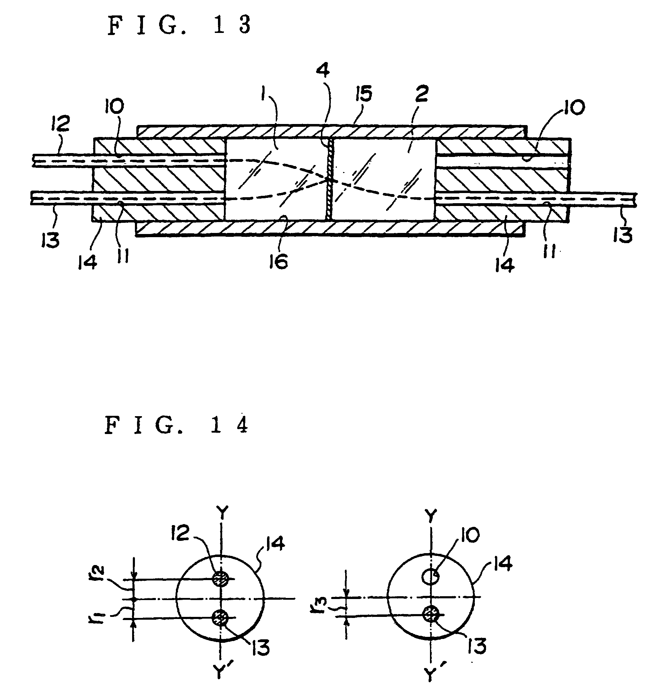

An experiment was carried out by the inventors of the present invention so that the problems arising from the fastening of the optical fibers to the rod lenses using epoxy resin might be solved. FIG. 13 shows the side view of the experimental setup. FIG. 14 shows the relation of a ferrule 14 and optical fibers 12, 13. A pair of throughholes 10, 11 are provided to the ferrule 14 of FIG. 13. The optical fibers 12, 13 are fastened to ferrule 14 in the lefthand side of FIG. 14. The optical fiber 13 is fastened to the ferrule 14 in the righthand side of FIG. 14.

The pair of ferrules 14 are connected to the outer surfaces of graded index rod lenses 1, 2 within throughhole 16 of alignment sleeve 15. Since a ferrule with a pair of throughholes could not be fabricated by machine work, a sintered zirconia ceramic material was used in an experimental study.

When the zirconia ceramic material is sintered at a temperature of 1,500°C or more, the sintered zirconia ceramic material shrinks by an amount of 20% or so in length. Variations of the length are remarkable, i.e., at least ±2%. If the distance between throughholes 10, 11 is 1mm, dimensional errors are ±20μm or so. The trial experiment was thus unsuccessful.

U.S. patent No. 4,989,946 discloses optical fiber switches constructed using ferrules with two optical fibers or seven optical fibers.

U.S. patent No. 4,733,931 discloses an optical signal coupler with a pair of graded index lenses joined at a common face by a semi-reflective film (e.g., dichroic coating).
Opposite sides of the lens system are provided with a pair of fibers having their ends at predetermined points such that a light signal applied to either of the fibers has a first part which reflects from the lens coating onto the other fiber on the same side of the lens and a second part which passes through the lens system to exit via one of the remaining fibers at the opposite lens side. The entire lens and four fiber waveguides are formed into a unitary relationship by encapsulation.

EP 0725 289 A discloses an optical coupler consisting of a first and a second optical fiber cylindrical ferrule, in each of which four optical fibers are inserted into a single through-hole located at the center of the ferrule. The fibers extend to an end-face of the respective cylindrical structure and are fastened therein. The optical coupler comprises furthermore a pair of graded index rod lenses, a thin film which partly transmits incident light and reflects the remainder and aligning and fastening means arranged to locate and fasten said thin film at the interface between adjacent end-faces of said pair of graded index rod-lenses, with the other end-faces of the lenses contacting respective end-faces of said first and second optical fiber ferrules and arranged to align the central axes of said optical fiber ferrules to those of said graded index rod lenses. The ferrules are unrotably mounted within a cylindrical sleeve. EP0725289 is cited persuant to Article 54(3) EPC.

As described heretofore, bidirectional optical couplers and unidirectional optical multiplexers/demultiplexers, which are fabricated using the optical couplers consisting of graded index rod lenses, have excellent optical performance. The connections of the graded index rod lenses to the optical fibers are, however, a cause for concern.

SUMMARY OF THE INVENTION

The objective of the present invention is to provide an optical coupler constructed according to claim 1.

An optical fiber ferrule for an optical coupler has a throughhole whose center line is in parallel to a reference on the ferrule, four ends of optical fiber elements are inserted from one end of the throughhole to the other end thereof, wherein the relation between diameter of the end-face and diameter the optical fiber element is defined by the following formula:

$$d = (2^{1/2} + 1)d_1 + \delta$$

where
d: Diameter of the throughhloe at the center of the ferrule end-face.
$d_1$: Diameter of the optical fiber element. and
δ: Allowance.

In the optical fiber ferrule, the reference is on the outer cylindrical surface of the ferrule, the outer diameter of another optical component to which the end-face of the ferrule to be connected has the same reference as the ferrule.

An optical coupler consists of
first and second optical fiber ferrules, in each of which four optical fibers are tightly inserted into a throughhole at the center of the end-face of the respective cylindrical structure and fastened there,

a pair of graded index rod lenses,

a thin film which partly transmits incident light and reflects the remainder,

and

fastening means which locates the thin film at the interface between the pair of graded index rod lenses, contacts the end-faces of the first and second optical fiber ferrules to the outer surfaces of the pair of graded index rod lenses, aligns the central axes of the optical fiber ferrules to the graded index rod lenses, aligns the optical axis of each optical fiber in the first ferrule to that of each optical fiber in the second ferrule by rotating the second ferrule around the optical axis thereof so that the four optical fibers are symmetrically arranged with respect to the optical axis of the graded index rod lens, and fastens them together.

In the optical coupler, the thin film transmits light power at first wavelength $(\lambda_1)$ and reflects the light power at second wavelength $(\lambda_2)$ when incident light contains light power at both first and second wavelengths $(\lambda_1 + \lambda_2)$.

In the optical coupler, the four optical fibers are installed in one of the pair of ferrules and other two optical fibers in the other ferrules so that the optical coupler having a pair of 1x2 circuits can be fabricated using a pair of lens units.

In the optical coupler, separated two of four optical fibers are installed in one of the pair of ferrules and one of others four optical fibers is installed in the other ferrule so that a 1x2 circuit is formed.

In the optical coupler, the thin film which partly transmits incident light thereon and reflects the remainder, the thin film made of multiple layers of dielectric materials which are formed on the surface of a transparent sheet.

In the optical coupler, the fastening means are the cylindrical sleeve for aligning the optical axes in angle and radius.

In the optical coupler, the fastening means are constructed using a V-grooved block for aligning the optical axes in angle and radius.

BRIEF DESCRIPTION OF THE DRAWINGS

FIG. 1 shows a cross-sectional view of an embodiment of a ferrule built in accordance with the present invention.

FIG. 2 shows an end-face of the embodiment of the ferrule.

FIG. 3 shows a cross-sectional view of a pair of graded index rod lenses which are inserted into a cylindrical sleeve to illustrate a part of the first embodiment of the optical coupler built in accordance with the present invention.

FIG. 4 shows a cross-sectional view of the pair of graded index rod lenses connected to a pair of ferrules, which are inserted into the cylindrical sleeve.

FIG. 5 shows an extended view of end-faces of the ferrules to be used in the pair of 1x2 optical couplers of FIG. 4.

FIG. 6 shows the cross-sectional views of the graded index rod lenses and a thin film which are used to build the pair of 1x2 optical couplers of FIG. 4.

FIG. 7 shows a second embodiment of the optical coupler built in accordance with the present invention.

FIG. 8 shows a cross-sectional view demonstrating a fabrication process of the second embodiment of the invention.

FIG. 9 shows a cross-sectional view demonstrating the adjustment processes of the second embodiment of the invention.

FIG. 10 shows a cross-sectional view of a conventional bidirectional optical coupler constructed using graded index rod lenses and a filter having a nonuniform spectral response.

FIG. 11 shows a cross-sectional view of a conventional unidirectional optical wavelength division multiplexer constructed using graded index rod lenses and a filter having a non uniform spectral response.

FIG. 12 shows cross-sectional views of the junctions between the graded index rod lenses and the optical fibers of both devices of FIGs. 10 and 11, respectively.

FIG. 13 shows a cross-sectional view of an improved device constructed by the inventors so as to solve the problems of the conventional device.

FIG. 14 shows the relations of the optical fibers on the ferrule in the improved device of FIG. 13.

DETAILED DESCRIPTION OF PREFERRED EMBODIMENT

The coupler of the present invention will be described referring to the drawings.

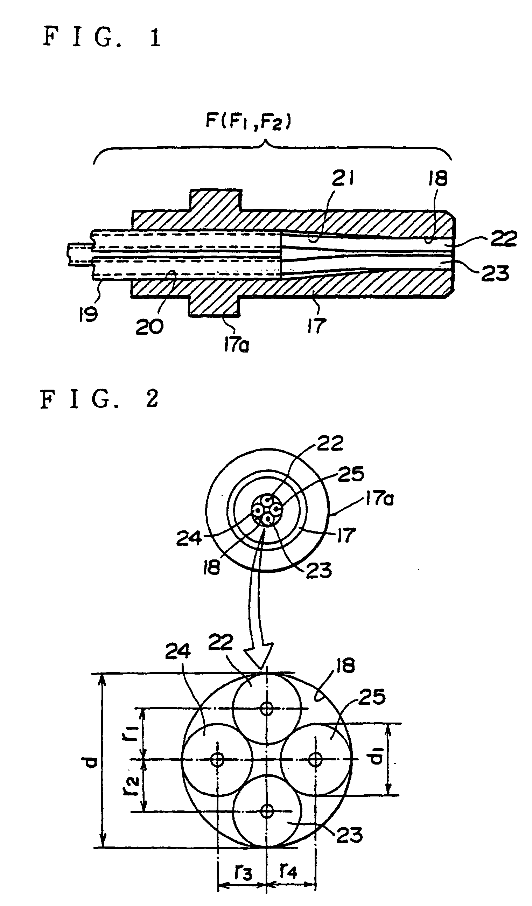

In FIG. 1, a ferrule 17 is a cylinder made of a sintered zirconia ceramic material, and provides a through-hole 18 made up of three parts 18, 21, 20 with an inner diameter $d=303\mu m$ is on the right side. In this embodiment an outer cylindrical surface of the ferrule 17 includes a reference or reference line. The central axis of the throughhole is parallel with the reference.

Within the ferrule this hole expands to accommodate optical fiber overcoats 19 as shown. The connecting hole 21 having a tapered surface at an inclination angle of 15 degrees or less connects the hole 20 to the small hole 18 at the end-face.

A flange 17a is provided on the left side of the ferrule (FIG. 1). Optical fiber elements 22 through 25 are the single-mode optical fiber elements with an outer diameter $d_1$ of $125\mu m$ ($d_1 = 125\mu m$), from which overcoats made of resin are removed.

The diameter of the throughhole on the light side which can be seen from the end-face of the ferrule 17, is expressed in terms of the diameter of the optical fiber elements as:

$$d=(2^{1/2} + 1)d_1 + \delta$$

where

d: Diameter of the throughhole at the center of the ferrule.

$d_1$: Diameter of the optical fiber element. and

s: Allowance for errors in the order of microns.

Allowance $\delta$ is 3μm or less ($\delta \leq$ 3μm) in the present embodiment, provided that inner diameter d of the throughhole at the end-face of the ferrule is normally 303μm (d=303μm), and that diameter $d_1$ of the optical fiber element is nominally 125μm ($d_1$ = 125μm).

The outer surfaces of the optical fiber elements 22 through 25 are contact as shown in FIG. 2, to form a optical fiber ferrule. Optical fiber elements 22 though 25 are also contact with the inner diameter of the throughhole 18. By using two of these ferrules a pair of $F_1$ and $F_2$ with four optical fibers are thus formed.

Assuming that inner diameter d of the throughhole 18 at the end-face of the ferrule is 303μm (d = 303μm), and that outer diameter $d_1$ of the respective single-mode optical fiber element is 125μm ($d_1$ = 125μm). The distances $r_1$, $r_2$, $r_3$, and $r_4$ from the central axis of ferrule throughhole 18 to the optical axes of optical fiber elements 22 through 25 are calculated as 88.39 to 89.00μm (See FIG. 2). The distance of the optical axis of each optical fiber element from the central axis of throughhole 18 has an error of 0.3μm. The angle of the optical axis of an optical fiber element from the optical axis of another optical fiber element has an error of 0.004°, which corresponds to a length of 2.2μm. These errors can be eliminated in a manner that will be described hereafter.

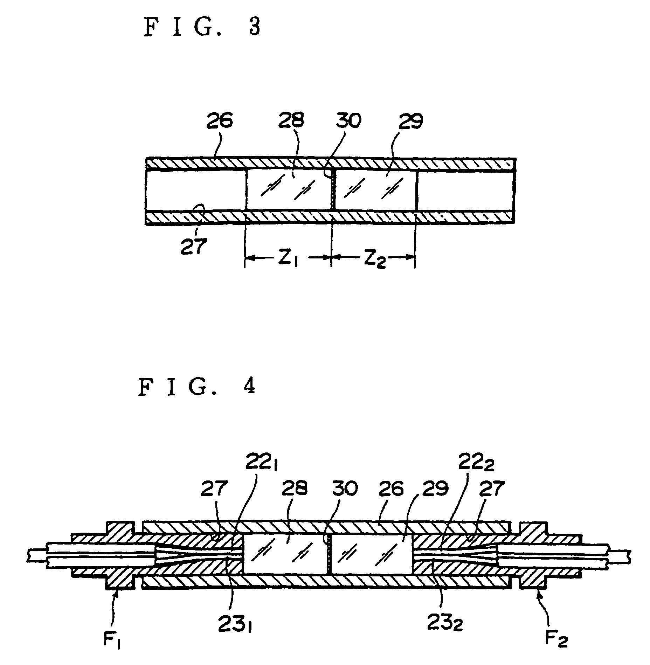

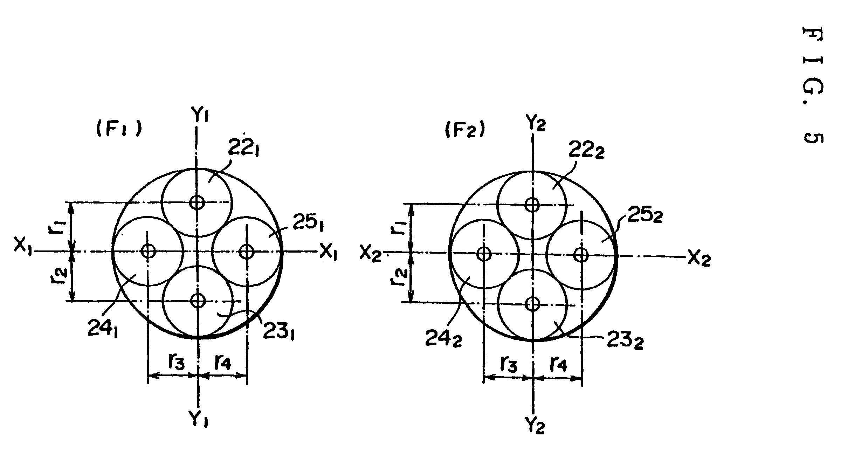

Consider the lens unit wherein an optical coupler is formed by the pair of ferrules $F_1$ and $F_2$ which are coupled together, each contains four optical fiber elements. FIG. 3 shows a graded index rod lens unit which may be used to form an optical coupler. FIG. 4 shows an embodiment of the optical coupler constructed using the lens unit combined with the ferrules.

A precise throughhole 27 is bored through a cylindrical sleeve 26 as shown in FIG. 3. The cylindrical sleeve 26 is made of sintered zirconia ceramic, phosphor bronze, or stainless steel. The sleeve 26 can be a slit sleeve wherein a slit is provided along the axis thereof. A pair of graded index rod lenses 28, 29 with axial lengths ($Z_1$ and $Z_2$) of 0.25 pitch ($Z_1 = Z_2 = 0.25$ pitch) are inserted into the throughhole 27 placed at the center thereof.

The outer diameter of ferrules $F_1$ and $F_2$, each containing four optical fiber elements, reads to precisely agree with the outer diameter of the graded index rod lenses 28, 29.

A thin film 30 of multiple layers of dielectric materials is formed at the proximal surface on one side of either graded index rod lens 28 or 29 so that part of the incident light is reflected from the thin film 30 and the remainder is transmitted therethrough.

This thin film 30 may be independent of the light wavelength (for example, one which transmits 50% of the light power and reflects the other 50%), or may be such that it can transmit the light power at a first wavelength ($\lambda_1$) and reflect the light power at a second wavelength ($\lambda_2$).

The process of assembling the rod lenses and the ferrules will be explained hereafter.

(First Step) A Ferrule $F_1$ with four optical fiber elements is to be inserted into the throughhole 27 of the cylindrical sleeve 26 so that the end-face of the ferrule F contacts the outer surface of the graded index rod lens 28. A ferrule $F_2$ with four optical fiber elements is to be inserted into the throughhole 27 of the cylindrical sleeve 26 so that the end-face of ferrule $F_2$ contacts the outer surface of graded index rod lens 29.

(Second Step) Either ferrule $F_1$ or $F_2$, each having four optical fiber elements, is to be rotated around the central axis of the ferrule until the optical axes of the four optical fibers of ferrule $F_1$ agree with those of installed of ferrule $F_2$, respectively, and these ferrules are to be fastened in this aligned position.

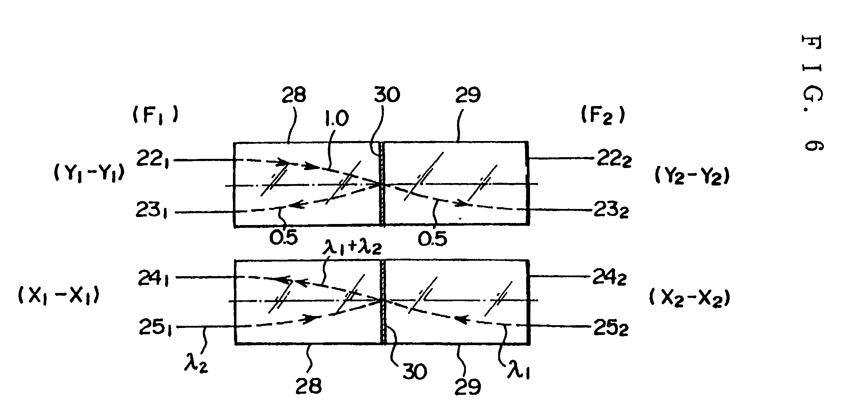

FIG. 5 shows cross-sectional views of ferrules $F_1$ and $F_2$ which are used as a pair of 1x2 optical couplers. In FIG. 5, the extended end-faces of ferrules $F_1$ and $F_2$, each having four optical fiber elements, are seen from the graded index rod lenses.

For convenience in explaining the present invention, the optical fiber elements $22_1$, $23_1$, $24_1$, $25_1$ are assumed to be installed in the ferrule $F_1$, and the optical fiber elements $22_2$, $23_2$, $24_2$, $25_2$ are assumed to be installed in the ferrule $F_2$.

The center of optical fiber elements $22_1$, $23_1$ in ferrule $F_1$ lie on the plane $Y_1$-$Y_1$, and those of optical fiber elements $24_1$, $25_1$ in ferrule $F_1$ on plane $X_1$-$X_1$. Plane $Y_1$-$Y_1$ is orthogonal to plane $X_1$-$X_1$, crossing on the axial center line (the center of the throughhole 18 of the ferrule 17) of ferrule $F_1$.

The centers of the optical fiber elements $22_2$, $23_2$ in the ferrule $F_2$ lie on the plane $Y_2$-$Y_2$, and those of optical fiber elements $24_2$, $25_2$ in the ferrule $F_2$ on the plane $X_2$-$X_2$. The plane $Y_2$-$Y_2$ is orthogonal to the plane $X_2$-$X_2$, crossing on the axial center line (the center of the throughhole 18 of ferrule 17) of the ferrule $F_2$.

In the second step, process is carried out to make the plane $Y_1$-$Y_1$ agree with the plane $Y_2$-$Y_2$ (or to make the plane $X_1$-$X_1$ agree with the plane $X_2$-$X_2$).

FIG. 6 shows the cross-sectional views (cut along the planes $Y_1$-$Y_1$ and the $Y_2$-$Y_2$ and planes $X_1$-$X_1$ and $X_2$-$X_2$) of the graded index rod lens 28, the thin film 30, and the graded index rod lens 29 in the optical coupler. In FIG. 6, the locations of the optical fibers in the paired ferrules are indicated by $22_1$ through $25_1$, and $22_2$ through $25_2$.

Assume that the thin film 30 reflects 50% of the incident light power independently of its wavelength and transmits the remaining 50% of the incident light power regardless of its wavelength.

The light power is incident on the graded index rod lens 28 after passing through the optical fiber $22_1$, and 50% of the incident light power is reflected from the thin film 30. The reflected light power goes back to the optical fiber $23_1$. The remaining 50% of the incident light power enters the optical fiber $23_2$, passing through the graded index rod lens 29.

Assume that the thin film 30 transmits the light power at a first wavelength ($\lambda_1$) and reflects another light power at a second wavelength ($\lambda_2$).

If the light power at second wavelength ($\lambda_2$) is fed to the optical fiber $25_1$ when the light power at first wavelength ($\lambda_1$) is fed to optical fiber $25_2$, the light powers at both the first and second wavelengths ($\lambda_1+\lambda_2$) appear at the optical fiber $24_1$

As described heretofore, up to two optical power combiners/splitters can be built both using a pair of ferrules, each consisting of four optical fibers, and a lens unit.

In the present embodiment, two of the optical fibers installed in the ferrule $F_1$ and one of the optical fibers in the ferrule $F_2$ are used in the present embodiment. It is also possible for one optical fiber of the ferrule $F_1$ and two optical fibers of the ferrule $F_2$ to be used to build an optical combiner/splitter.

Since four optical fibers are installed in the throughhole of the ferrule so that the centers of the respective optical fibers are located the same distance from the center of the throughhole of the ferrule, the unused optical fibers are used to mechanically maintain the structure of the optical fiber assembly in the ferrule. The end-faces of the unused optical fibers are to be sealed.

The second embodiment of the present invention, i.e, an optical coupler wherein no sleeve is used, will be described hereafter.

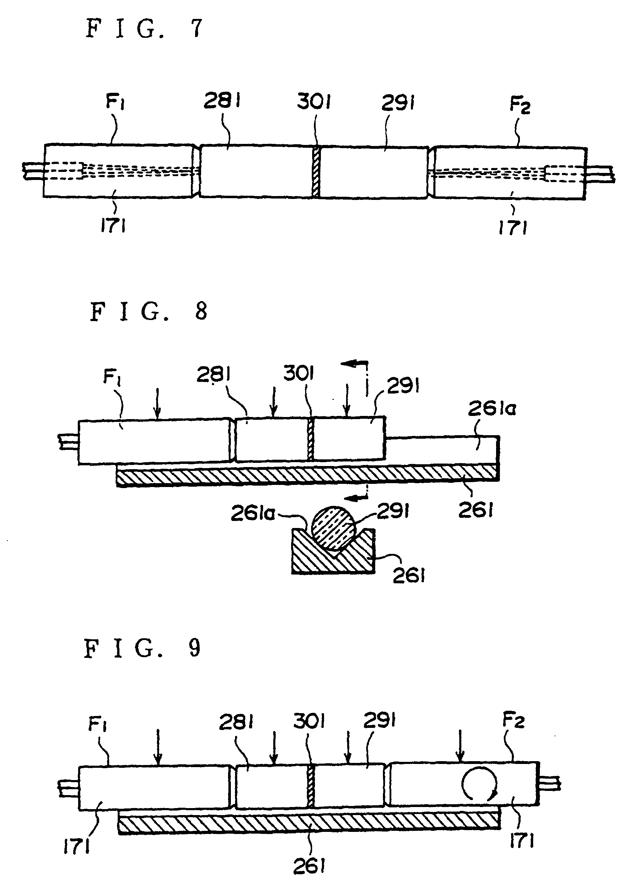

FIG. 7 shows a configuration of the second embodiment of the optical coupler built in accordance with the present invention. FIG. 8 shows the fabrication processes of the second embodiment. FIG. 9 shows the adjustment processes of the second embodiment.

In FIG. 7 through 9, the ferrules $F_1$ and $F_2$, each having four optical fibers, are same as those of the first embodiment in principle. The ferrules $F_1$ and $F_2$ are made of sintered zirconia ceramic materials, which are of a cylindrical structure. Each ferrule has no flange 17a for coupling the ferrules, unlike the first embodiment of the invention. Graded index rod lenses 281, 291 and thin film 301 are the same as those of the first embodiment in basic structure. The outer diameters of the cylindrical bodies 171 of the ferrules $F_1$ and $F_2$ are to precisely be the same as those of the graded index rod lenses 281, 291 within a tolerance of 2μm. Since the throughhole of each ferrule should have an inner diameter (d) of 303μm (d = 303μm) at the center thereof, the diameter ($d_1$) of each optical fiber element should be determined in accordance with the following expression.

$$d = (2^{1/2} + 1)d_1 + \delta$$

If diameter $d_1$ of each optical fiber element is nominally 125μm ($d_1$ = 125μm) when inner diameter d of the ferrule end-face at the center thereof is nominally 303μm (d = 303μm), allowance $\delta$ of errors should be 3μm or less ($\delta \leq$ 3μm).

The fabrication and adjustment processes of the second embodiment will be explained referring to FIGs. 8 and 9.

The second embodiment uses a V-grooved block 261 wherein the V-groove is provided for aligning in angle and radius the optical axes of the ferrules, each having four optical fibers, to those of the graded index rod lenses. The graded index rod lenses 281, 291 are provided at the center of the block 261 containing a V-groove 261a. A glass sheet 302 on one side of which a thin film coating 301 acting as a half mirror is inserted at the interface between the graded index rod lenses 281, 291.

A cylindrical body 171 of the first ferrule $F_1$ with four optical fibers and the graded index rod lens 281 are mounted on the V-groove 261a so that the end-face of cylindrical body 171 of the first ferrule $F_1$ with four optical fibers contacts the outer end-face of the first graded index rod lens 281. The cylindrical body 171 of the first ferrule $F_1$ is then aligned to the graded index rod lens 281 and fastened there.

As shown in FIG. 9, the end-face of the second ferrule $F_2$ with four optical fibers contacts the outer end-face of the second graded index rod lens 291, and then the latter is aligned to the former.

Since the diameters of first and second ferrules $F_1$ and $F_2$ are the same as those of the first and second graded index rod lenses 281, 291, the central axes of these components have been aligned at this step of the process.

Ferrule $F_1$ is to be rotated with respect to the ferrule $F_2$ until the optical axis of each optical fibers in the ferrule $F_1$ agrees with that in ferrule $F_2$ so that the optical axis of each optical fiber in the ferrule $F_1$ or $F_2$ is symmetrical with respect to the optical axes of the graded index rod lenses, and the former is to be fastened to the latter. The optical axes of the ferrules $F_1$ and $F_2$ have been aligned at this step.

The first ferrule $F_1$ with four optical fibers, the first graded index rod lens 281, the second graded index rod lens 291, and the second ferrule $F_2$ with other four optical fibers are arranged in line and fastened there to build the optical coupler of FIG. 7.

The optical coupler can be operated while mounted on V-grooved block 261.

US patent No. 4,989,946 discloses a ferrule whose throughhole contains both a two optical fiber endface, and a seven optical fiber end-face. The diameter of the throughhole of the ferrule wherein two optical fiber end-faces are inserted is twice that of the optical fiber.

Assume that the inner diameter of the ferrule is dw, the diameter of the optical fiber is $d_1$, and that the error between the diameter of the throughhole of the ferrule and the diameter of the optical fiber is δw. Then, dw = $2d_1$ = δw holds for them. If δw = 3μ, the angler error between the pair of opical fibers is 12.5 degree for a ferrule, and 25 degrees for pair of ferrules. These ferrules cannot be used in the present invention:

An angular error is 0.004 degrees is stated in the embodiments of the present invention.

Expression dw = $3d_1$ + δw is valid for the ferrule containing 7 optical fibers, which is disclosed in the aforementioned patent specification. The fabrication of the ferrule containing 7 optical fibers is difficult because 7 optical fibers cannot easily be aligned.

As described heretofore, the optical coupler built in accordance with the present invention provides the throughhole whereto four optical fibers are fastened. The optical coupler can be built in the same manner as the optical connector of conventional type, and no special skill is needed for fabricating the assembly. The number of steps of the processing is drastically reduced. Offsets in optical axes between the respective optical fibers and graded index rod lenses can be reduced to the order of 1 to 2μm if one of the paired ferrules, each having four optical fibers, is properly rotated with respect to the other ferrule during the alignment. The offsets in the order of 1 to 2μm are the same as those of the optical connectors of conventional types.

If the V-grooved block is used in the alignment, the angular and radial adjustment can easily be done. After the alignment is carried out using the V-grooved block, the optical coupler can be operated without the use of the V-grooved block, or together with the V-grooved block while the optical coupler is fastened to the V-grooved block.

Epoxy resin will degrade when exposed to a strong light beam, i.e., a laser light beam, therefore epoxy resin cannot be used to keep optical paths. This invention eliminates the performance degradation of the optical coupler due to the fatigue of the epoxy resin, because it is not used.

A variety of modifications of the aforementioned embodiments are within the scope of the present invention as defined in the appended claims. Examples optical couplers have been demonstrated in conjunction with ferrules with four optical fibers. This type of ferrule with four optical fibers can be coupled with any other ferrule with four optical fibers. In this case, the outer diameter of the other optical component to be coupled with the ferrule with four optical fibers is required to be the same as that of the ferrule with four optical fibers.

**Claims**

1.  An optical coupler consisting of
    first ($F_1$) and second ($F_2$) optical fiber cylindrical ferrules, in each of which four optical fibers ($22_1$, $23_1$,$24_1$,$25_1$,$22_2$,$23_2$,$24_2$,$25_2$) are tightly inserted into a single throughhole (18,20,21) located at the center of the ferrule, the fibers extending to an endface of the respective cylindrical structure and being fastened therein,
    a pair of graded index rod lenses (28,29; 281,291),
    a thin film (30;301) which partly transmits incident light and reflects the remainder,
    and
    aligning and fastening means (26;261) arranged to locate and fasten said thin film (30;301) at the interface between adjacent end-faces of said pair of graded index rod lenses (28,29,281,291), with the other end-faces of the lenses (28,29; 2811,291) contacting respective end-faces of said first and second optical fiber ferrules ($F_1$,$F_2$) and arranged to align the central axes of said optical fiber ferrules ($F_1$,$F_2$) to those of said graded index rod lenses (28,29,281,291), allowing the alignment of the optical axis of each optical fiber ($22_1$,$23_1$,$24_1$, $25_1$) in said first ferrule ($F_1$) to that of a corresponding optical fiber ($22_2$,$23_2$,$24_2$,$25_2$) in said second ferrule ($F_2$) by rotating said second ferrule ($F_2$) around the central axis thereof so that said four optical fibers are symmetrically arranged with respect to the central optical axis of said graded index rod lens (28,29;281,291).

2.  An optical coupler as claimed in claim 1,
    wherein
    said thin film (30;301) transmits light power at first wavelength ($\lambda_1$) and reflects the light power at second wavelength ($\lambda_2$) when incident light contains light power at both first and second wavelengths ($\lambda_1 + \lambda_2$).

3.  An optical coupler as claimed in claim 1 or claim 2,
    wherein
    said four optical fibers ($22_1$,$23_1$,$24_1$,$25_1$) installed in one of said pair of ferrules ($F_1$) are located relative to two optical fibers ($23_2$,$25_2$) in the other ferrule so that the optical coupler forms a pair of 1x2 optical couplers.

4.  An optical coupler as claimed in claim 1 or claim 2,
    wherein
    two of said four optical fibers ($22_1$,$23_1$) installed in one of said pair of ferrules ($F_1$) and one of the four optical fibers ($23_2$) installed in the other fer-

rule (F$_2$) form a single 1x2 optical coupler.

**5.** An optical coupler as claimed in any of claims 1 to 4 wherein

said thin film (30;301), which partly transmits incident light thereon and reflects the remainder, is made of multiple layers of dielectric materials that are formed on the surface of a transparent sheet (302).

**6.** An optical coupler as claimed in any of claims 1 to 5, wherein

said fastening means comprises a cylindrical sleeve (26) for aligning the optical axes of the fibers.

**7.** An optical coupler as claimed in any of claims 1 to 5, wherein

said fastening means comprises a V-grooved block (261) for aligning the central axes of the ferrules and the lenses.

## Patentansprüche

**1.** Eine optische Kopplungseinrichtung, bestehend aus

einer ersten (F$_1$) und einer zweiten (F$_2$) zylindrischen Lichtleiter-Ferrule, in denen jeweils vier Lichtleiter (22$_1$, 23$_1$, 24$_1$, 25$_1$, 22$_2$, 23$_2$, 24$_2$, 25$_2$) fest in eine einzelne Durchgangsöffnung (18, 20, 21) eingeführt sind, die im Zentrum der Ferrule angeordnet ist, wobei sich die Lichtleiter bis zu einer Endfläche der jeweiligen zylindrischen Struktur erstrecken und darin befestigt sind,

einem Paar von Graded-Index-Stablinsen (28, 29; 281, 291),

einem Dünnfilm (30; 301), der einfallendes Licht teilweise transmittiert und das Übrige reflektiert, und

Ausrichtungs- und Befestigungsmitteln (26; 261), die so angeordnet sind, daß sie den Dünnfilm (30; 301) an der Schnittstelle zwischen benachbarten Endflächen des Paares von Graded-Index-Stablinsen (28, 29; 281, 291) anordnen und befestigen, wobei die anderen Endflächen der Linsen (28, 29; 281, 291) die jeweiligen Endflächen der ersten und der zweiten Lichtleiter-Ferrule (F$_1$, F$_2$) berühren und so angeordnet sind, daß sie die Zentralachsen der Lichtleiter-Ferrulen (F$_1$, F$_2$) zu denen der Graded-Index-Stablinsen (28, 29; 281, 291) ausrichten, wobei die Ausrichtung der optischen Achse jedes Lichtleiters (22$_1$, 23$_1$, 24$_1$, 25$_1$) in der ersten Ferrule (F$_1$) zu der eines entsprechenden Lichtleiters (22$_2$, 23$_2$, 24$_2$, 24$_2$) in der zweiten Ferrule (F$_2$) durch Drehen der zweiten Ferrule (F$_2$) um deren Zentralachse ermöglicht wird, so daß die vier Lichtleiter bezüglich der zentralen optischen Achse der Graded-Index-Stablinsen (28, 29; 281, 291) symmetrisch angeordnet sind.

**2.** Eine optische Kopplungseinrichtung gemäß Anspruch 1, wobei

der Dünnfilm (30; 301) Lichtenergie bei einer ersten Wellenlänge ($\lambda_1$)transmittiert und Lichtenergie bei einer zweiten Wellenlänge ($\lambda_2$) reflektiert, wenn einfallendes Licht Lichtenergie bei sowohl der ersten als auch der zweiten Wellenlänge (($\lambda_1 + \lambda_2$) enthält.

**3.** Eine optische Kopplungseinrichtung gemäß Anspruch 1 oder Anspruch 2, wobei

die vier Lichtleiter (22$_1$, 23$_1$, 24$_1$, 25$_1$), die in einer von dem Paar von Ferrulen (F$_1$) installiert sind, relativ zu zwei Lichtleitern (23$_2$, 25$_2$) in der anderen Ferrule so angeordnet sind, daß die optische Kopplungseinrichtung ein Paar von optischen 1x2-Kopplungseinrichtungen bildet.

**4.** Eine optische Kopplungseinrichtung gemäß Anspruch 1 oder Anspruch 2, wobei

zwei der vier Lichtleiter (22$_1$, 23$_1$), die in einer von dem Paar von Ferrulen (F$_1$) installiert sind und einer der vier Lichtleiter (23$_2$), die in der anderen Ferrule (F$_2$) installiert sind, eine einzelne optische 1x2-Kopplungseinrichtung bilden.

**5.** Eine optische Kopplungseinrichtung gemäß einem der Ansprüche 1 bis 4, wobei

der Dünnfilm (30; 301), der darauf einfallendes Licht teilweise transmittiert und das Übrige reflektiert, aus mehreren Schichten von dielektrischem Material gebildet ist, die auf der Oberfläche einer transparenten Schicht gebildet sind.

**6.** Eine optische Kopplungseinrichtung gemäß einem der Ansprüche 1 bis 5, wobei

die Befestigungsmittel eine zylindrische Hülse (26) zum Ausrichten der optischen Achse der Lichtleiter aufweisen.

**7.** Eine optische Kopplungseinrichtung gemäß einem der Ansprüche 1 bis 5, wobei

die Befestigungsmittel einen Block (261) mit einer V-förmigen Nut zum Ausrichten der Zentralachse der Ferrulen und der Linsen aufweisen.

## Revendications

**1.** Coupleur optique constitué

d'une première et d'une deuxième ferrules cylindriques (F1, F2) dans chacune desquelles quatre fibres optiques (22$_1$, 23$_1$, 24$_1$, 25$_1$, 22$_2$, 23$_2$, 24$_2$, 25$_2$) sont montées de manière serrée dans un seul trou traversant (18, 20, 21) situé au centre de la ferrule, les fibres s'étendant jusqu'à une face d'extrémité de la structure cylindrique respective et étant fixées dans celle-ci,

d'une paire de lentilles tiges à gradient d'indice (28, 29 ; 281, 291),

d'un film mince (30 ; 301) qui transmet une partie de la lumière incidente et réfléchit le reste, et

d'un moyen d'alignement et de fixation (26 ; 261) fait pour positionner et fixer le film mince (30 ; 301) à l'interface entre des faces d'extrémité adjacentes de la paire de lentilles tiges à gradient d'indice (28, 29 ; 281, 291), les autres faces d'extrémité des lentilles (28, 29 ; 281, 291) étant en contact avec des faces d'extrémité respectives d'une première et d'une deuxième ferrules ($F_1$, $F_2$), et pour aligner les axes centraux des ferrules ($F_1$, $F_2$) avec ceux des lentilles tiges à gradient d'indice (28, 29 ; 281, 291), permettant l'alignement de l'axe optique de chaque fibre optique ($22_1$, $23_1$, $24_1$, $25_1$) montée dans la première ferrure ($F_1$) avec celui d'une fibre optique correspondante ($22_2$, $23_2$, $24_2$, $25_2$) montée dans la deuxième ferrule ($F_2$) par rotation de la deuxième ferrule ($F_2$) autour de son axe central de façon que les quatre fibres optiques soient placées symétriquement par rapport à l'axe optique central de la lentille tige à gradient d'indice (28, 29 ; 281, 291).

2. Coupleur optique selon la revendication 1, dans lequel le film mince (30 ; 301) transmet l'énergie lumineuse à une première longueur d'onde ($\lambda_1$) et réfléchit l'énergie lumineuse à une deuxième longueur d'onde ($\lambda_2$) lorsque la lumière incidente contient de l'énergie lumineuse aux première et deuxième longueurs d'onde ($\lambda_1$, $\lambda_2$).

3. Coupleur optique selon l'une des revendications 1 et 2, dans lequel les quatre fibres optiques ($22_1$, $23_1$, $24_1$, $25_1$) montées dans une ferrule ($F_1$) de la paire de ferrules sont placées par rapport à deux fibres optiques ($23_2$, $25_2$) montées dans l'autre ferrule de façon que le coupleur optique forme une paire de coupleurs optiques 1x2.

4. Coupleur optique selon l'une des revendications 1 et 2, dans lequel deux ($22_1$, $23_1$) des quatre fibres optiques montées dans une ferrule ($F_1$) de la paire de ferrules et une ($23_2$) des quatre fibres optiques montées dans l'autre ferrule ($F_2$) forment un seul coupleur optique 1x2.

5. Coupleur optique selon l'une des revendications 1 à 4, dans lequel le film mince (30 ; 301), qui transmet une partie de la lumière qu'il reçoit et réfléchit le reste, est constitué de multiples couches de matières diélectriques qui sont formées sur la surface d'une feuille transparente (302).

6. Coupleur optique selon l'une des revendications 1 à 5, dans lequel le moyen de fixation comprend un manchon cylindrique (26) pour l'alignement des axes optiques des fibres.

7. Coupleur optique selon l'une des revendications 1 à 5, dans lequel le moyen de fixation comprend un bloc à rainure en V (261) pour l'alignement des axes centraux des ferrules et des lentilles.

F I G. 1

F I G. 2

F I G. 3

F I G. 4

F I G. 5

FIG. 6

EP 0 722 101 B1

F I G. 7

F I G. 8

F I G. 9

F I G. 1 0

PRIOR ART

F I G. 1 1

PRIOR ART

F I G. 1 2

PRIOR ART

F I G. 1 3

F I G. 1 4